# EUROPEAN PATENT APPLICATION

(11) **EP 2 560 043 A2**
(43) Date of publication of application: **20.02.2013**
(21) Application number: 12161086.9
(22) Date of filing: 23.03.2012
(51) Int. Cl.: G02F 1/1333

(54) **Liquid crystal panel assembly and liquid crystal display apparatus having the same**

(30) Priority: 17.08.2011 KR 20110081654
(71) Applicant: Samsung Electronics Co., Ltd., Suwon-si, Gyeonggi-do, 443-742 (KR)
(72) Inventor: CHO, Byoung-jin, Gyeonggi-do (KR); LEE, Young-chol, Gyeonggi-do (KR); CHOI, Hyeong-sik, Gyeonggi-do (KR); JANG, Nae-won, Gyeonggi-do (KR); LEE, Sang-eun, Seoul (KR)
(74) Representative: Fearnside, Andrew Simon

(57) **Abstract**

An LGP-less liquid crystal panel assembly includes at least one light source generating light; a liquid crystal panel displaying the light generated from the light source, as an image; at least one optical film arranged behind the liquid crystal panel; an upper chassis and a lower chassis accommodating the light source, the liquid crystal panel, and the optical film; and at least one tension member applying tension to the optical film so as to prevent the optical film from drooping.

## Description

This application claims priority from Korean Patent Application No. 10-2011-0081654, filed on August 17, 2011, in the Korean Intellectual Property Office, the disclosure of which is incorporated herein by reference, in its entirety.

### BACKGROUND

### 1. Field

The inventive concept relates to a liquid crystal panel assembly and a liquid crystal display apparatus having the same, and more particularly to a liquid crystal panel assembly that is free of any light guide panel (LGP). The inventive concept also relates to a liquid crystal display apparatus that includes such a panel assembly.

### 2. Related Art

A liquid crystal display apparatus displays an image using liquid crystals. The liquid crystal display apparatus is quite ubiquitous, being used in many common electronic devices such as televisions and computer monitors.

A typical liquid crystal display apparatus includes a liquid crystal panel that uses light to display an image, a light source that provides the light to the liquid crystal panel, and a light guide panel (LGP) that guides the light from the light source to the liquid crystal panel. Between the LGP and the liquid crystal panel, there are optical films such as a diffusion sheet and a prism sheet. In this kind of arrangement, the LGP actually supports rear surfaces of the optical films. The LGP therefore allows the optical films to appear smooth and flat, without any drooping or sagging.

Recently, for thesake of saving production cost and reducing weight, a liquid crystal display apparatus that can operate with no LGP has been developed. Leaving out the LGP, however, introduces the issue of what to do about the optical films. In particular, without the support of the LGP, the optical films may tend to droop or sag, causing a deterioration in light uniformity and picture quality.

### SUMMARY

According to the present invention there is provided an apparatus and method as set forth in the appended claims. Other features of the invention will be apparent from the dependent claims, and the description which follows. An aspect of the inventive concept provides for a way to prevent optical films from drooping in a liquid crystal display apparatus that lacks, or is free of, an LGP.

An exemplary embodiment of the present disclosure provides an LGP-less liquid crystal panel assembly which includes at least one light source that generates light; a liquid crystal panel having a front panel surface and a rear panel surface, the light being received from the light source through the rear panel surface and being displayed on the front panel surface as an image; at least one optical film having a front film surface facing the rear panel surface, and having a rear film surface receiving the light from the light source; a chassis that includes an upper chassis and a lower chassis and accommodates the light source, the liquid crystal panel, and the optical film; and at least one tension member that applies tension to the optical film so as to prevent the optical film from drooping.

The tension member may be provided with a clip member, one end of the clip member may be coupled to an edge region of the optical film, and the other end of the clip member may be locked into one component in the liquid crystal panel assembly.

The liquid crystal panel assembly according to an exemplary embodimentmay further include an intermediate chassis between the upper chassis and the lower chassis; wherein the other end of the clip member is locked into the intermediate chassis.

The clip member may include a film coupling portion coupled to the optical film; and a locking portion locked into the intermediate chassis.

At least one coupling hole may be formed in the edge region of the optical film, and the film coupling portion may have a coupling hook extending through the coupling hole.

At least one locking groove may be formed in the intermediate chassis, and the locking portion may have a locking hook locked into the locking groove.

The intermediate chassis may have a first side surface supporting the optical film and a second side surface supporting the lower chassis, and an angle between the film coupling portion of the clip member and the locking portion may be smaller than an angle between the first side surface and the second side surface of the intermediate chassis.

The tension member may be provided with a lever member rotatably arranged in the liquid crystal panel assembly, one end of the lever member may be coupled to an edge region of the optical film, and the other end of the lever member may be pressed by the upper chassis when the upper chassis is coupled with the lower chassis.

The upper chassis may have a pressing protrusion pressing the other end of the lever member.

At least one coupling hole, into which the one end of the lever member is inserted, may be formed in the optical film.

The liquid crystal panel assembly according to an exemplary embodimentmay further include an intermediate chassis arranged between the upper chassis and the lower chassis; wherein the lever member is mounted on the intermediate chassis.

The light source may include at least one LED.

Another exemplary embodimentprovides an LGP-less liquid crystal panel assembly which includes at least one light source that generates light; a liquid crystal panel having a front panel surface and a rear panel surface, wherein the light is received from the light source through the rear panel surface and is displayed on the front panel surface as an image; at least one optical film having a front film surface facing the rear panel surface, and having a rear film surface receiving the light from the light source; and a chassis including an upper chassis, a lower chassis, and an intermediate chassis arranged between the upper chassis and a lower chassis, wherein the chassis accommodates the light source, the liquid crystal panel, and the optical film;wherein the intermediate chassis includes a first seating surface and a second seating surface on which an edge regions of the optical film is seated, the second seating surface is arranged closer to the center of the liquid crystal panel than the first seating surface; the second seating surface protrudes more towards the liquid crystal panel than the first seating surface;and the upper chassis presses the edge region of the optical film on the first seating surface when the upper chassis is coupled with the lower chassis.

The light source may include at least one LED.

Still another exemplary embodimentprovides a liquid crystal display apparatus including a liquid crystal panel assembly according to any one of the herein-described exemplary embodiments.

In yet another exemplary embodiment, a display apparatus includes a light source that directs light behind the display panel; and optical film having a rear surface through which the light from the light source must first pass before reaching the display panel, wherein the rear surface of the optical film is free of support from a light guide panel; and a tensioner that applies tension to the optical film.

The tensioner may comprise a clip member, in which case the tension applied to the optical film results from an elastic force of the clip member. Alternatively, the tensioner may comprise a lever member, in which case the tension applied to the optical film results from an engagement of one end of the lever member acting on the optical film. In yet another alternative, the tensioner may comprise a first seating surface of an intermediate chassis and a pressing surface of an upper chassis which apply tension to the optical film by gripping an edge of the optical film and pulling it over a second seating surface of the intermediate chassis. In any of these alternative exemplary embodiments, the display panel may comprise a liquid crystal display panel.

In still another exemplary embodiment, a display apparatus comprises a light source directed behind the display panel by an optical lens; and optical film having a rear surface through which light from the light source must first pass before reaching the display panel, wherein the rear surface of the optical film is free of support from a light guide panel; and means for applying tension to the optical film.

In this exemplary embodiment, the means for applying tension may comprise an elastic clip. Alternatively, the means for applying tension may comprise a lever. According to yet another alternative, the means for applying tension may comprise at least two different surfaces that come into contact in a manner that exerts tension on the optical film. In any of these alternative exemplary embodiments, the display panel may comprise a liquid crystal display panel.

### BRIEF DESCRIPTION OF THE DRAWINGS

The above and other aspects, features and advantages of the present disclosure will be more apparent from the following detailed description when taken in conjunction with the accompanying drawings, in which:

FIG. 1 is a partial cross-sectional view illustrating a liquid crystal panel assembly according to a first exemplary embodiment;

FIG. 2A is a plan view of an optical film provided in a liquid crystal panel assembly of FIG. 1;

FIG. 2B is an enlarged plan view of an area A in FIG. 2A;

FIG. 3A is a perspective view of a tension member provided in a liquid crystal panel assembly of FIG. 1;

FIG. 3B is a cross-sectional view taken along line I-I of FIG. 3A;

FIG. 4A is a cross-section view showing a step of coupling a clip member to an optical film;

FIG. 4B is a cross-sectional view showing a step applying tension to an optical film by taking advantage of an elastic force of the tension member that is a clip member;

FIG. 4C is a cross-sectional view showing a step of locking a clip member into an intermediate chassis by pressing the clip member;

FIG. 5 is a partial cross-sectional view illustrating a liquid crystal panel assembly according to a second exemplary embodiment;

FIG. 6A is a cross-sectional view showing the state of a liquid crystal panel assembly before an optical film is pulled by a lever member;

FIG. 6B is a cross-sectional view showing the state of a liquid crystal panel assembly when an optical film is being pulled by a lever member;

FIG. 7 is a cross-sectional view illustrating a liquid crystal panel assembly according to a third exemplary embodiment;

FIG. 8A is a cross-sectional view showing the shape of a liquid crystal panel assembly before tension is applied to an optical film;

FIG. 8B is a cross-sectional view showing the shape of a liquid crystal panel assembly when tension is applied to the optical film; and

FIG. 9 is a cross-sectional view schematically illustrating a liquid crystal display apparatus according to an exemplary embodiment.

### DETAILED DESCRIPTION

Hereinafter, exemplary embodiments that teach the inventive concept are described in some detail with reference to the accompanying drawings. However, the inventive concept is not restricted or limited to just these exemplary embodiments. In the discussion below, well-known functions or constructions will not be exhaustively describedso as to avoid obscuring the description with unnecessary detail.

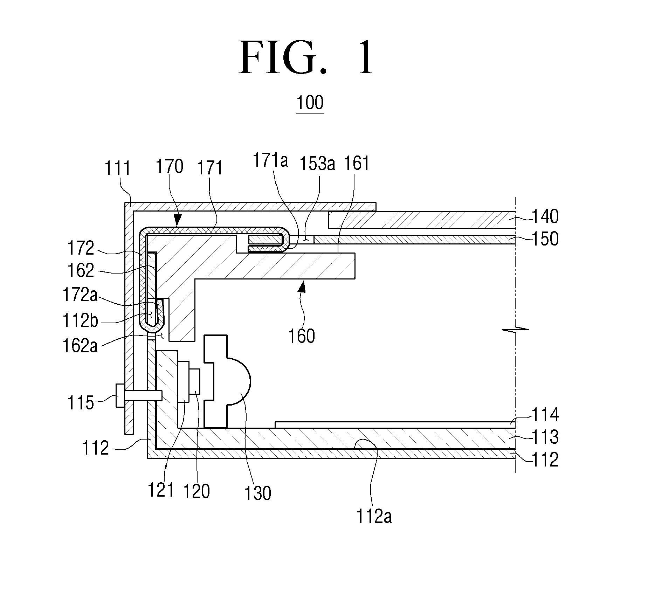

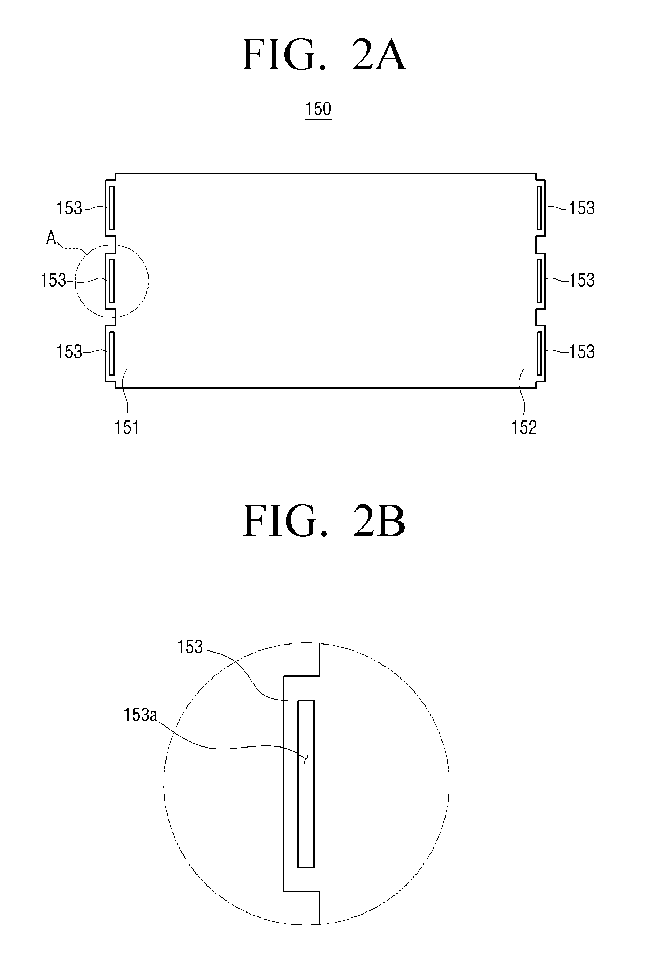

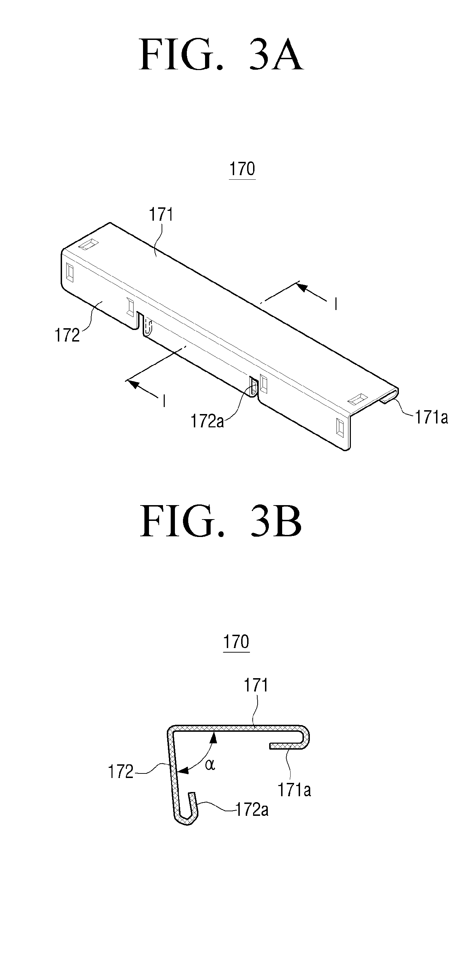

FIG. 1 is a partial cross-sectional view illustrating a liquid crystal panel assembly according to a first exemplary embodiment. FIG. 2A is a plan view of an optical film provided in a liquid crystal panel assembly of FIG. 1, and FIG. 2B is an enlarged plan view of an area A in FIG. 2A. FIG. 3A is a perspective view of a tension member provided in a liquid crystal panel assembly of FIG. 1, and FIG. 3B is a cross-sectional view taken along line I-I of FIG. 3A.

Referring to FIG. 1, a liquid crystal panel assembly 100 according to a first exemplary embodiment includes an upper chassis 111 and a lower chassis 112.

The upper chassis 111 and the lower chassis 112 are coupled to each other by a screw 115 to form a space for accommodating other components of the liquid crystal panel assembly 100. A heat sink 113 is mounted on an inner surface 112a of the lower chassis 112. The heat sink 113 is made of a metal material having high thermal conductivity (for example, aluminum). A reflection sheet 114 is attached to the heat sink 113.

The liquid crystal panel assembly 100 further includes a light source 120 and an optical lens 130.

The light source 120 generates and irradiates light toward the optical lens 130. In this exemplary embodiment, the light source 120 is an LED, but types of light sources may be used. Although only one light source 120 is illustrated in FIG. 1, the liquid crystal panel assembly 100 includes a plurality of light sources 120 arranged at equal intervals. The light source 120 is mounted on a driving panel 121, and the driving panel 121 is mounted on the heat sink 113.

The optical lens 130 is arranged in front of the light source 120 to refract at various angles the light that emanates from light source 120. As illustrated in FIG. 1, the liquid crystal panel assembly is free of (i.e., has no) a light guide panel. As is well known, alight guide panel is usually used to guide the light, that emanates from the light source, toward the liquid crystal panel. In this exemplary embodiment, however, the liquid crystal panel assembly 100 is equipped with the optical lens 130 instead of the light guide panel.Thus, the light that emanates from the light source 120 can be spread by virtue of the optical lens 130. Since this arrangement is free of alight guide panel, the liquid crystal panel assembly 100 can be manufactured at a reduced cost and has a lower weight when compared with the light guide panel type of liquid crystal panel assembly.

The liquid crystal panel assembly 100 further includes a liquid crystal panel 140 and an optical film 150. In FIG. 1, the liquid crystal panel 140 has a front panel surface that faces towards the upper part of the drawing figure and a rear panel surface that faces the lower part of the drawing figure. Likewise, the optical film 150 has a front film surface that faces towards the upper part of the drawing figure, and a rear film surface that faces toward the lower part of the drawing figure. As shown in the drawing figure, the front film surface of the optical film 150 faces the rear panel surface of the liquid crystal panel 140. Light from the light source 120 must first pass through the rear surface of the optical film 150 before reaching the display panel 140. Since there is no light guide panel, the rear surface of the optical film 150 is free of support from a light guide panel.

The liquid crystal panel 140 displays the light generated from the light source 120 as a color image. For this, the liquid crystal panel 140 includes a color filter substrate (not illustrated) having a color filter layer and a thin film transistor substrate (not illustrated) having thin film transistors. Liquid crystals (not illustrated) are accommodated between the color filter substrate and the thin film transistor substrate. Since the liquid crystal panel 140 is well known, the detailed description thereof will be omitted.

As mentioned above, optical film 150 is arranged in the rear of the liquid crystal panel 140 to face the liquid crystal panel 140. Although the optical film 150 appears as a single member in FIG. 1, it may include a plurality of optical sheets such as a diffusion sheet, a prism sheet, and the like. As illustrated in the exemplary embodiment shown in FIG. 2A, the optical film 150 may have a substantially rectangular shape, with three tips 153formed on each of two edge regions 151 and 152. As illustrated in FIG. 3B, a rectangular coupling hole 153a is formed on each tip 153. In other alternative exemplary embodiments, the coupling holes 153a may be directly formed on the edge regions 151 and 152 without forming the tips 153.

The liquid crystal panel assembly 100 further includes an intermediate chassis that is also called a middle mold.

The intermediate chassis 160 supports some of components of the liquid crystal panel assembly 100, and, together with the upper and lower chassis parts 111 and 112, the three can be thought of as a chassis. The intermediate chassis 160 is arranged on the edge regions in the liquid crystal panel assembly 100, and is arranged between the upper chassis 111 and the lower chassis 112. As illustrated in FIG. 1, a first side surface 161 of the intermediate chassis 160 is in contact with the optical film 150, and a second side surface 162 of the intermediate chassis 160 is in contact with the lower chassis 112. The first side surface 161 and the second side surface 162 of the intermediate chassis 160 are at right angles with each other. On the second side surface 162 of the intermediate chassis 160 there is formed at least one locking groove 162a for locking a tension member 170 to be described later.

As described above, the liquid crystal panel assembly 100 according to this exemplary embodiment is not provided with any light guide panel. Accordingly, the liquid crystal panel assembly 100 further includes tension members 170 in order to prevent the optical film 150 from drooping or sagging. The presence of the liquid crystal panel prevents any substantial amount of drooping or sagging in the direction of the front panel surface. Of concern, however, is the possibility of drooping more sagging in the direction of the rear side (that is, toward the reflection sheet 114). Although only one tension member 170 is shown in FIG. 1, the liquid crystal panel assembly 100 has tension members 170 the number of which corresponds to the number of coupling holes 153a of the optical film 150. Accordingly, the liquid crystal panel assembly 100 in this teaching example includes 6 tension members 170 in total.

In this exemplary embodiment, the tension member is provided with a clip member. Accordingly, the tension member 170 is also called a clip member 170. As illustrated in FIGS. 3A and 3B, the clip member/ tension member 170 includes a film coupling portion 171 and a locking portion 172, and an anglebetween them is substantially, but is not limited to, 80°. At the end of the film coupling portion 171, a coupling hook 171a is formed, and at the end of the locking portion 172, a locking hook 172a is formed. As illustrated in FIG. 1, the coupling hook 171 a of the clip member 170 is inserted into the coupling hole 153a of the optical film 150 to be coupled to the optical film 150, and the locking hook 172a of the clip member 170 is locked into the locking groove 162a of the intermediate chassis 160. When the coupling hook 171a of the clip member 170 is in the coupling hole 153a, the coupling hook 171 a extends through the coupling hole 153a. Referring to FIG. 1, in the area of the lower chassis 112 that faces the second side surface 162 of the intermediate chassis 160, a through-hole 112b is formed. The locking hook 172a of the clip member 170 is inserted into the through-hole 112b of the lower chassis 112 when the locking hook 172a is locked into the locking groove 162 of the intermediate chassis 160.

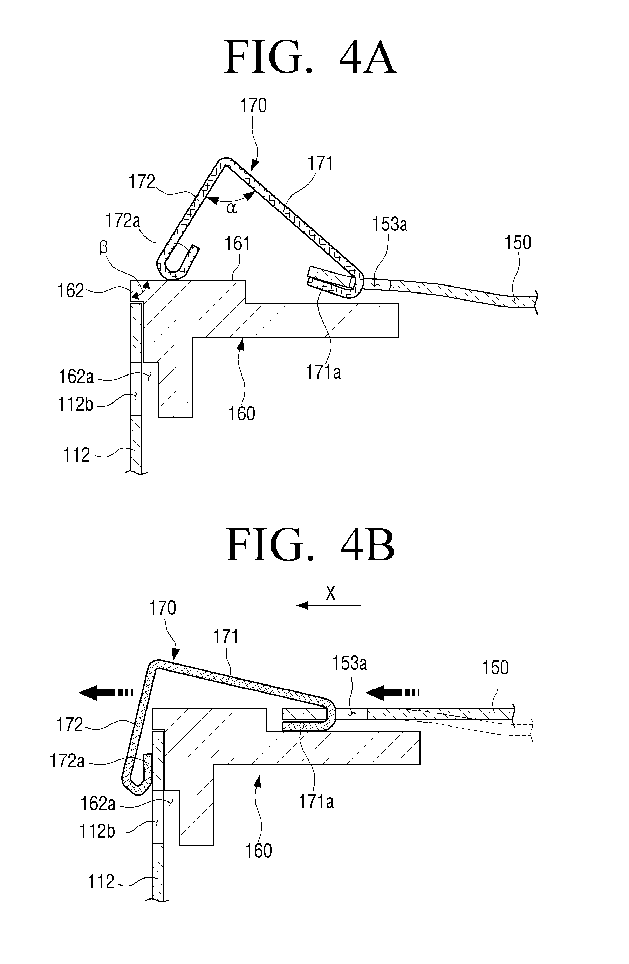

With reference to FIGS. 4A to 4C, the operation of the clip member (tension member) 170 provided in the liquid crystal panel assembly 100 according to the first exemplary embodiment will be described in detail. FIG. 4A is a cross-section view showing a step of coupling a clip member to an optical film, FIG. 4B is a cross-sectional view showing a step of applying tension to an optical film 150 by taking advantage of an elastic force of the clip member 170.

Referring to FIG. 4A, the coupling hook 171a of the clip member 170 is inserted into the coupling hole 153a of the optical film 150, and thus the clip member 170 is thus coupled to the optical film 150. At this time, the optical film 150 is not under tension.

Referring to FIG. 4B, the clip member 170 that is coupled to the optical film 150 is pulled in the outside direction (that is, X direction) to apply a tension to the optical film 150. Accordingly, as shown in FIG. 4B, the optical film 150 tension is applied to keep optical film 150 from being loose, from sagging, or from drooping.

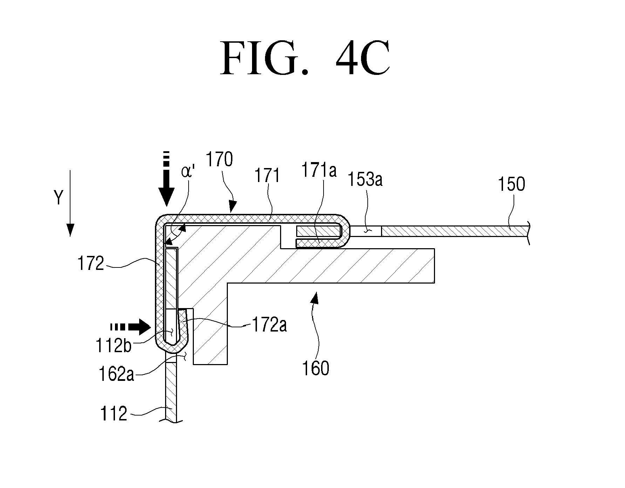

Referring to FIG. 4C, the clip member 170, which is in a pulled state in the X direction, is pressed downward by an operator, and the locking hook 172a of the clip member 170 is locked into the locking groove 162a of the intermediate chassis 160 through the through-hole 112b of the lower chassis 112.

As illustrated in FIG. 4A, the angle β between the film coupling portion 171 and the locking portion 172 of the clip member 170 is smaller than 90°. In this exemplary embodiment, α is substantially 80°. As illustrated in FIG. 4C, when the clip member 170 is locked into the intermediate chassis 160, the angle α' between the film coupling portion 171 and the locking portion 172 of the clip member 170 is larger than the angle α before the clip member 170 is locked into the intermediate chassis 160. That is, when the clip member 170 is locked into the intermediate chassis 160, the gap between the film coupling portion 171 and the locking portion 172 of the clip member 170 becomes wider than it was in the original state.

The clip member 170is made of a material with resilience.When installed as shown in FIG. 1, the clip member 170 has thereby been elastically deformed so that the angle between the film coupling portion 171 and the locking portion 172 is larger than in its natural state. The construction of the clip member 170 biases the film coupling portion 171 and the locking portion 172 to move toward each other, thereby providing an elastic force which ensures that tension on the optical film 150 is maintained. That is to say, the clip member 170 applies tension to the optical film by taking advantage of an elastic force thereof.

In addition, the elastic force,that biases the coupling portion 171 and the locking portion 172 toward their original state, provides an action so that the locking hook 172a of the clip member 170 is easily locked into the locking groove 162a of the intermediate chassis 160. Further, since the gap between the film coupling portion 171 and the locking portion 172 of the clip member 170 is kept in a wider state than the original state even after the locking of the clip member 170, the elastic force of the clip member 170 prevents the locking hook 172a of the clip member 170 from receiving or coming out from the locking groove 162a of the intermediate chassis 160.

As seen from FIGS. 4A to 4C, the optical film 150 is fixed to the intermediate chassis 160 by the clip member 170, and in this procedure, the optical film 150 is pulled in the outside direction (X direction) by the clip member 170 to prevent the optical film 150 from drooping downward (in the Y direction). As described above, although the liquid crystal panel assembly 100 according to the first exemplary embodiment is provided with no light guide panel under the optical film 150, the drooping of the optical film 150 is prevented by the clip member (tension member) 170, and thus the deterioration of the light uniformity and picture quality due to the drooping of the optical film 150 can be prevented.

In this exemplary embodiment,the clip member 170 is mounted on the intermediate chassis 160. However, in other alternative exemplary embodiments, as will be appreciated by those familiar with this field, the clip member 170 can be mounted on a different component (for example, the upper chassis or lower chassis) of the liquid crystal panel assembly 100. In addition, the particular shape of the clip member 170 can be varied in accordance with the engineering needs of the installation.

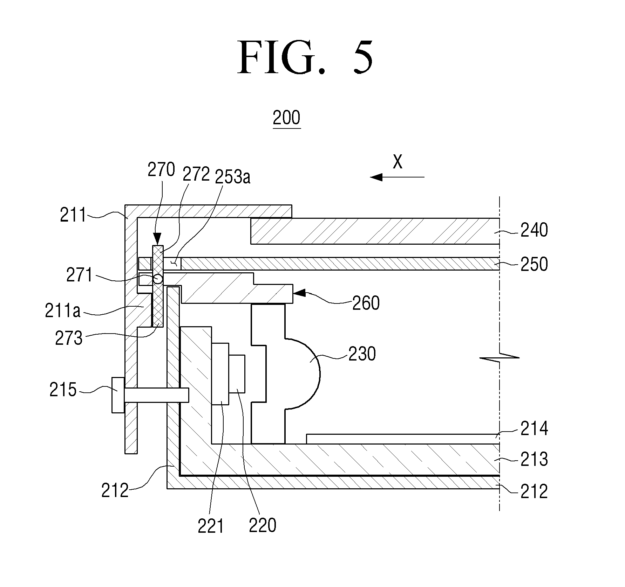

FIG. 5 is a partial cross-sectional view illustrating a liquid crystal panel assembly according to a second exemplary embodiment.

The liquid crystal panel assembly 200 according to the second exemplary embodiment as illustrated in FIG. 5 is similar in several ways to the liquid crystal panel assembly 100 according to the first exemplary embodiment as described above. For example, a lower chassis 212, a heat sink 213, a reflection sheet 214, a light source 220, a driving panel 221, an optical lens 230, a liquid crystal panel 240, and an optical film 250 of the liquid crystal panel assembly 200 are the same as those of the above-described liquid crystal panel assembly 100. Accordingly, a duplicate description of these components will be omitted.

Referring to FIG. 5, the liquid crystal panel assembly 200 includes a lever member 270 as a tension member. The lever member 270 is rotatably mounted around a rotating shaft 271 of the lever member 270. One end 272 of the lever member 270 is inserted into the coupling hole 253a of the optical film 250, and the other end 273 of the lever member 270 is pressed inwardly by the upper chassis 211, so that the optical film 250 is pulled in the outside direction (X direction) by the lever member 270. As illustrated in FIG. 5, a pressing protrusion 211a for pressing the lever member 270 is formed on the upper chassis 211. The reference numeral 215 indicates a screw for coupling the upper chassis 211 with the lower chassis 212.

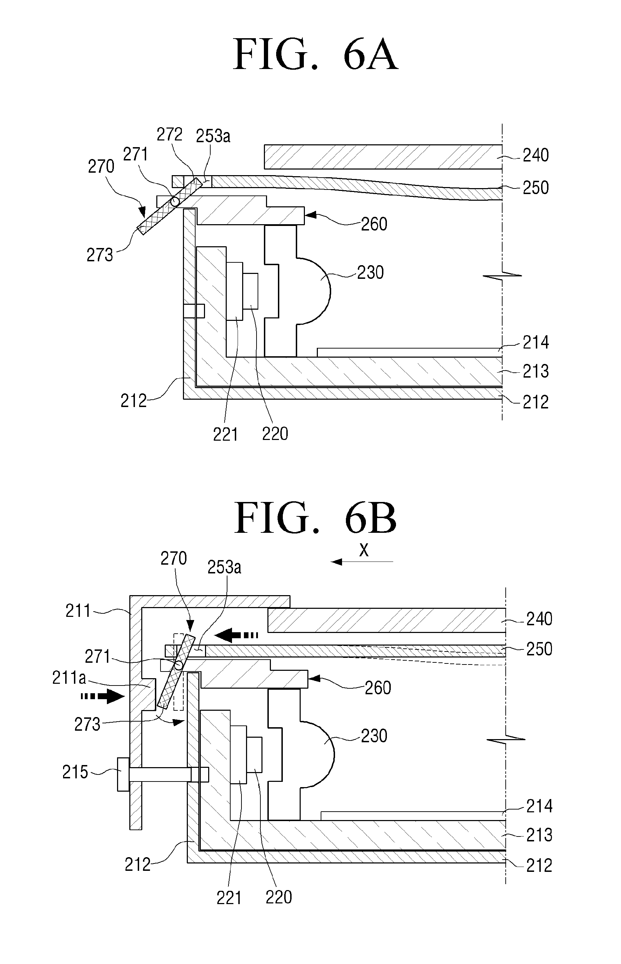

Referring to FIGS. 6A and 6B, the operation of the lever member (tension member) 270 that is provided in the liquid crystal panel assembly 200 according to the second exemplary embodiment will be described in more detail. FIG. 6A is a cross-sectional view showing the shape of a liquid crystal panel assembly before an optical film is pulled by a lever member, and FIG. 6B is a cross-sectional view showing the shape of a liquid crystal panel assembly when an optical film is pulled by a lever member.

Referring to FIG. 6A, one end 272 of the lever member 270 is inserted into the coupling hole 253a which is formed on the edge region of the optical film 250. At this time, the optical film 250 is kept in a loose state.

Referring to FIG. 6B, when the upper chassis 211 is coupled to the lower chassis 212, the other end 273 of the lever member 270 is pressed inwardly by the pressing protrusion 211a of the upper chassis 211. At this time, the lever member 270 is rotated in one direction (in the drawing, counterclockwise) around the rotating shaft 271, and thus the optical film 250 is pulled in the outside direction (X direction). That is, the tension in the X direction is applied to the optical film 250 by the lever member 270.

As described above, although the liquid crystal panel assembly 200 according to the second exemplary embodiment is provided with no light guide panel under the optical film 250, the tension is applied to the optical film 250 by the lever member 270, and thus the optical film 250 is prevented from drooping downward (in the Y direction). Accordingly, the deterioration of the light uniformity and picture quality due to the drooping of the optical film 250 can be prevented.

It will be appreciated by those familiar with this field that the use of a freely rotating lever and a rotating shaft 271 are not strictly necessary to the practice of this exemplary embodiment. Other kinds of members that provide a lever action may be used. For example, a resilient member that can be elastically deformed during the installation of the optical film 250 on the shaft 271, but which returns to its natural state after the installation and thereby provides tension, can be used.

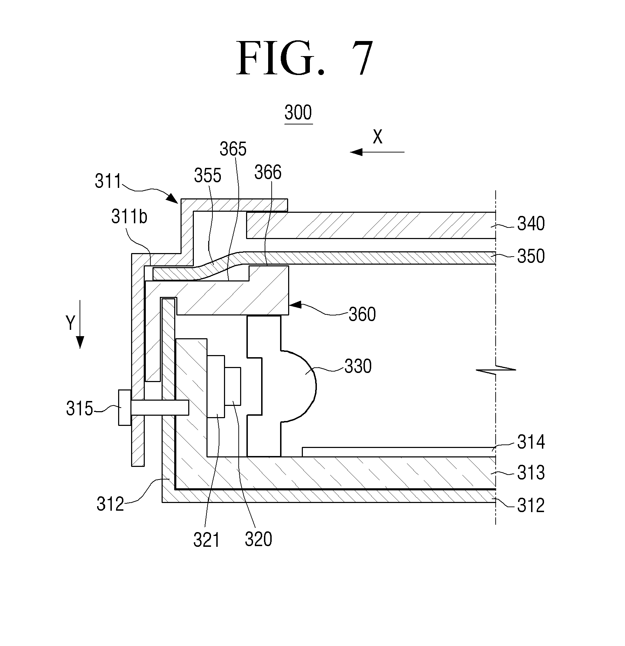

FIG. 7 is a cross-sectional view illustrating another liquid crystal panel assembly according to a third exemplary embodiment.

The liquid crystal panel assembly 300 according to the third exemplary embodiment as illustrated in FIG. 7 is similar to the liquid crystal panel assembly 100 according to the first exemplary embodiment as described above. For example, a lower chassis 312, a heat sink 313, a reflection sheet 314, light sources 320, a liquid crystal panel 340, and an optical film 350 of the liquid crystal panel assembly 300 are the same as those of the above-described liquid crystal panel assembly 100. Accordingly, a duplicate description of these components will be omitted.

Referring to FIG. 7, an edge region 355 of the optical film 350 is put on a first seating surface 365 and a second seating surface 366 of the intermediate chassis 360. The second seating surface 366is arranged closer to the center of the liquid crystal panel than the first seating surface 365. In addition, the second seating surface 366, has a height that is higher than the first seating surface 365. In other words, it protrudes more toward the liquid crystal panel then the first seating surface 365.Further, the edge region 355 of the optical film 350 arranged on the first seating surface 365 is pressed downward (that is, in the Y direction) by a pressing surface 311b of the upper chassis 311. As the upper chassis 311 presses the edge region 355 of the optical film 350, the optical film 350 is pulled in the outside direction (that is, in the X direction). In other words, the first seating surface 365 of the intermediate chassis 360 and a pressing surface 311b of the upper chassis 311 apply tension to the optical film 150 by gripping and edge 355 of the optical film 150 and pulling it over a second seating surface 366 of the intermediate chassis.

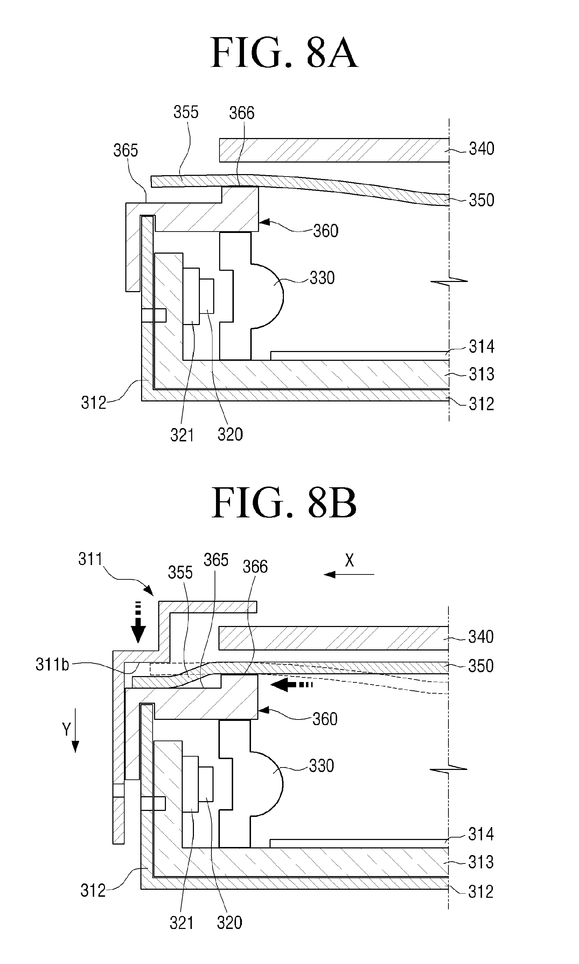

Referring to FIGS. 8A and 8B, a procedure of applying tension to the optical film 350 provided in the liquid crystal panel assembly 300 according to the third exemplary embodiment will be described. FIG. 8A is a cross-sectional view showing the shape of the liquid crystal panel assembly before tension is applied to the optical film, and FIG. 8B is a cross-sectional view showing the shape of the liquid crystal panel assembly when tension is applied to the optical film.

Referring to FIG. 8A, the optical film 350 before the tension is applied to the optical film 350 is free of tension.

Referring to FIG. 8B, when the upper chassis 311 is coupled to the lower chassis 312, the edge region 355 of the optical film 350 is pressed downward (in the X direction) and over the second seating surface 366 by the pressing surface 311b of the upper chassis 311, and at this time, the optical film 350 is pulled in the outside direction (X direction). That is, the optical film 350 receives the tension through the pressing action of the upper chassis 311. Accordingly, the optical film 350 is changed from the loose state to a tight state.

As described above, although the liquid crystal panel assembly 300 according to the third exemplary embodiment is provided with no light guide panel under the optical film 350, the upper chassis 311 presses the edge region 355 of the optical film 350, and thus the optical film 350 is prevented from drooping downward (in the Y direction). Accordingly, the deterioration of the light uniformity and picture quality due to the drooping of the optical film 350 can be prevented.

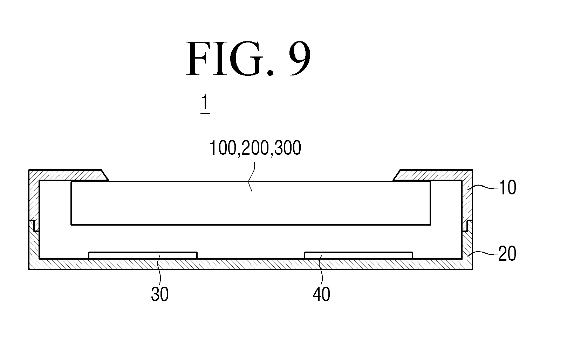

FIG. 9 is a cross-sectional view schematically illustrating a liquid crystal display apparatus according to an exemplary embodiment.

In FIG. 9, the liquid crystal display apparatus 1 is a liquid crystal display television (LCD TV). However, it will be appreciated by those familiar with this field that the inventive concept can be applied to other types of display devices such as a computer monitor and the like.

Referring to FIG. 9, the liquid crystal display apparatus 1 includes an upper housing 10 and a lower housing 20. These housings 10 and 20 accommodate one of the liquid crystal panel assemblies 100, 200, and 300 according to the above-described exemplary embodiments. In the rear of the liquid crystal panel assembly 100, 200, or 300, a power board 30 for supplying a voltage to the liquid crystal display device 1 and a control board 40 for controlling the operation of the liquid crystal display apparatus 1 are arranged. Although the power board 30 and the control board 40 are simply illustrated in FIG. 9, other circuit boards may be additionally provided in the liquid crystal display apparatus 1.

It will be appreciated that three different ways of providing tension on optical films have been taught, above:(1) ac lip approach in which a clip member (such as, e.g., clip member 170) provides tension through an elastic force; (2) a lever approach in which a lever member (such as, e.g., lever member 270) is pressed by another part so as to provide tension directly or indirectly to the optical film; and (3) a chassis compression approach in which two different parts (such as, e.g., upper chassis 311 and intermediate chassis 360) have surfaces that cooperate to provide tension directly or indirectly to the optical film (such as, e.g., the first 365 and second 366 seating surfaces which cooperate with the pressing surface 311b).

Speaking more generally, the clip member 170, the lever member 270, and the seating and pressing surfaces 365, 366, and 311b may all be thought of as different kinds of tensioners.

Another way to put this is to say that the clip approach, the lever approach, and the chassis compression approach employ means for providing tension. These means for providing tension have in common the function of taking an optical film which might otherwise tend to droop or sag, and applying force in at least one direction to reduce, ameliorate, prevent, or eliminate such drooping or sagging. Structurally, the clip approach involves at least an elastic clip; the lever approach involves a lever; and the chassis compression approach involves at least two different surfaces that come into contact in a manner that exerts tension on the optical film. The exemplary embodiments shown above may be understood to provide teaching examples of how such means for providing tension may be realized in a concrete manner, and those familiar with this field will understand from these exemplary embodiments how to equivalently implement an elastic clip, a lever, and/or chassis compression in any given situation.

While the present disclosure has been shown and described with reference to certain exemplary embodiments thereof, it will be understood by those skilled in the art that various changes in form and detail may be made therein without departing from the scope of the inventive concept, as defined by the appended claims.

## Claims

1. An LGP-less liquid crystal panel assembly comprising:
at least one light source generating light;
a liquid crystal panel displaying the light generated from the light source as an image;
at least one optical film arranged in the rear of the liquid crystal panel to face the liquid crystal panel;
an upper chassis and a lower chassis accommodating the light source, the liquid crystal panel, and the optical film; and
at least one tension member applying tension to the optical film so as to prevent the optical film from drooping.

2. The liquid crystal panel assembly as claimed in claim 1, wherein the tension member is provided with a clip member, one end of the clip member is coupled to an edge region of the optical film, and the other end of the clip member is locked into one component in the liquid crystal panel assembly.

3. The liquid crystal panel assembly as claimed in claim 2, further comprising an intermediate chassis;
wherein the other end of the clip member is locked into the intermediate chassis.

4. The liquid crystal panel assembly as claimed in claim 3, wherein the clip member comprises:
a film coupling portion coupled to the optical film; and
a locking portion locked into the intermediate chassis.

5. The liquid crystal panel assembly as claimed in claim 4, wherein at least one coupling hole is formed on the edge region of the optical film, and the film coupling portion has a coupling hook extending through the coupling hole.

6. The liquid crystal panel assembly as claimed in claim 4, wherein at least one locking groove is formed on the intermediate chassis, and the locking portion has a locking hook locked into the locking groove.

7. The liquid crystal panel assembly as claimed in claim 4, wherein the intermediate chassis has a first side surface supporting the optical film and a second side surface supporting the lower chassis, and an angle between the film coupling portion of the clip member and the locking portion is smaller than an angle between the first side surface and the second side surface of the intermediate chassis.

8. The liquid crystal panel assembly as claimed in claim 1, wherein the tension member is provided with a lever member rotatably arranged in the liquid crystal panel assembly, one end of the lever member is coupled to an edge region of the optical film, and the other end of the lever member is pressed by the upper chassis when the upper chassis is coupled to the lower chassis.

9. The liquid crystal panel assembly as claimed in claim 8, wherein the upper chassis has a pressing protrusion pressing the other end of the lever member.

10. The liquid crystal panel assembly as claimed in claim 8, wherein at least one coupling hole, into which the one end of the lever member is inserted, is formed on the optical film.

11. The liquid crystal panel assembly as claimed in claim 8, further comprising an intermediate chassis arranged between the upper chassis and the lower chassis;
wherein the lever member is mounted on the intermediate chassis.

12. The liquid crystal panel assembly as claimed in claim 1, wherein the light source comprises at least one LED.

13. An LGP-less liquid crystal panel assembly comprising:
at least one light source generating light;
a liquid crystal panel displaying the light generated from the light source as an image;
at least one optical film arranged in the rear of the liquid crystal panel to face the liquid crystal panel;
an upper chassis and a lower chassis accommodating the light source, the liquid crystal panel, and the optical film; and
an intermediate chassis arranged between the upper chassis and the lower chassis;
wherein the intermediate chassis includes a first seating surface and a second seating surface on which an edge regions of the optical film is seated, the second seating surface is arranged on an inner side rather than the first seating surface with a height that is higher than the first seating surface, and the upper chassis presses the edge region of the optical film when the upper chassis is coupled to the lower chassis.

14. The liquid crystal panel assembly as claimed in claim 13, wherein the light source comprises at least one LED.

15. A liquid crystal display apparatus including a liquid crystal panel assembly according to any one of claims 1 to 14.
